# FASCICULE DE BREVET EUROPEEN

(11) **EP 4 172 038 B1**
(45) Date de publication et mention de la délivrance du brevet: **01.01.2025**
(21) Numéro de dépôt: 21736314.2
(22) Date de dépôt: 27.06.2021
(51) Int. Cl.: B64C 1/14, E05D 11/10

(54) **MECANISME BISTABLE POUR PORTE D'AERONEF**
BISTABILER MECHANISMUS FÜR EINE FLUGZEUGTÜR
BISTABLE MECHANISM FOR AN AIRCRAFT DOOR

(30) Priorité: 30.06.2020 FR 2006882
(43) Date de publication de la demande: 03.05.2023
(73) Titulaire: Latecoere, 31500 Toulouse (FR)
(72) Inventeur: DEVILLEZ, Sébastien, 31240 SAINT JEAN OCCITANIE (FR)
(74) Mandataire: Junca, Eric
(86) Numéro de dépôt international: PCT/EP2021/067596
(87) Numéro de publication internationale: WO 2022/002804

(56) Documents cités:
- WO-A1-2019/211347
- WO-A1-2019/211349
- DE-A1- 10 134 400

## Description

### DOMAINE TECHNIQUE

L'invention concerne le domaine de l'aéronautique et vise plus particulièrement les portes d'aéronef adaptées à occuper différentes configurations et à être maintenues dans ces configurations par des mécanismes bistables.

### ART ANTÉRIEUR

Les portes d'aéronef sont couramment adaptées à occuper différentes configurations comportant deux états stables et à faire appel à un mécanisme bistable qui permettent à la porte d'occuper l'une ou l'autre de ces configurations, en empêchant la porte de se maintenir dans une configuration non prévue.

Par exemple, une porte d'aéronef peut présenter une configuration fermée et une configuration ouverte et peut comporter un mécanisme bistable qui, lorsque la porte est relâchée dans une position intermédiaire entre la configuration ouverte et la configuration fermée, entraine la porte vers la configuration ouverte ou vers la configuration fermée. Aucune position stable n'est permise en dehors de la configuration ouverte et de la configuration fermée.

Selon un autre exemple, les portes d'aéronef comprennent généralement des leviers permettant de manoeuvrer la porte, de la verrouiller, ou encore d'activer ou désactiver des mécanismes de sécurité de la porte. Une porte d'aéronef peut, par exemple, comporter un arbre longitudinal, actionné en rotation par un levier, commandant des butées de verrouillage. Une telle porte d'aéronef présente une première configuration de verrouillage dans laquelle un levier est dans une position de verrouillage, et une deuxième configuration de déverrouillage dans laquelle le levier est dans une position de déverrouillage. La porte d'aéronef peut comporter un mécanisme bistable qui permet au levier d'occuper l'une ou l'autre des deux positions autorisées (verrouillage ou déverrouillage), et qui empêche toute position stable intermédiaire du levier. Lorsque le levier est relâché en dehors de l'une de ces positions stables, il bascule vers l'une ou l'autre de ces positions stables de verrouillage ou de déverrouillage, en fonction de la position dans laquelle il se trouve lorsqu'il est relâché.

Les mécanismes bistables remplissent une fonction relative à la sûreté d'actionnement de la porte ou de mécanismes portés par la porte, et sont ainsi garants de la sécurité de l'aéronef.

Dans le domaine aéronautique, les mécanismes bistables sont généralement réalisés par une bielle à ressort. Une bielle à ressort est un vérin constitué de deux tubes emmanchés coaxialement et adaptés à coulisser l'un dans l'autre à l'encontre d'un ressort. L'un des éléments mobiles de la porte d'aéronef est alors relié à l'une des extrémités de cette bielle à ressort, tandis qu'un autre élément mobile de la porte est relié à la deuxième extrémité de la bielle à ressort. Lorsque ce deuxième élément de la porte est déplacé, la bielle à ressort travaille en compression, jusqu'à une position de basculement à partir de laquelle la bielle à ressort travaille en détente. Lorsque le deuxième élément est relâché avant le point de basculement, la bielle à ressort le ramène à sa position initiale stable correspondant à la première configuration de la porte. Lorsque le deuxième élément est relâché après le passage du point de basculement, la bielle à ressort repousse le deuxième élément vers sa deuxième position stable correspondant à la deuxième configuration de la porte.

Ce type de solution de mise en oeuvre des mécanismes bistables dans les portes d'aéronef est couramment employé dans l'aéronautique et répond aux objectifs de fiabilité et sécurité imposés. Cependant, les mécanismes bistables existant dans les portes d'aéronef sont des mécanismes relativement complexes, basés sur le coulissement de pièces les unes par rapport aux autres, ce qui nécessite des ajustements mécaniques adaptés. De plus, ces mécanismes bistables emploient des éléments de construction mécanique onéreux tels que rotules, guidages linéaires, etc. De plus, l'assemblage d'un certain nombre de pièces requiert du temps et de l'organisation lors de la fabrication de la porte d'aéronef.

Les mécanismes connus sont ainsi onéreux en pièces et en cout de production, et représentent de plus une masse non négligeable au sein de la porte d'aéronef. Des nécessités relatives aux réglages et à la maintenance en général sont par ailleurs entrainées par l'usage de tels mécanismes bistables dans les portes d'aéronef.

Les documents WO2019/211347 et DE10134400 décrivent par ailleurs d'autres mécanismes bistables.

### EXPOSÉ DE L'INVENTION

L'invention a pour but d'améliorer les portes d'aéronef de l'art antérieur.

A cet effet, l'invention vise une porte d'aéronef adaptée à occuper une première configuration dans laquelle un premier élément de la porte occupe une première position par rapport à un deuxième élément de la porte, et une deuxième configuration dans laquelle le premier élément occupe une deuxième position par rapport au deuxième élément, cette porte d'aéronef comportant un mécanisme bistable sollicitant la porte d'aéronef vers l'une ou l'autre des première ou deuxième configurations. Le mécanisme bistable comprend :
- une première chape comprenant un premier socle fixé sur le premier élément et un premier pivot monté rotatif sur le premier socle ;
- une deuxième chape comprenant : un deuxième socle fixé sur le premier élément ; un levier dont une première extrémité est montée pivotante sur le deuxième socle ; un deuxième pivot monté rotatif sur la deuxième extrémité du levier ; un moyen de couplage du levier avec le deuxième élément de la porte ;
- une arche élastiquement déformable en flexion dont une première extrémité est fixée au premier pivot et dont une deuxième extrémité est fixée au deuxième pivot.

L'expression « porte d'aéronef » est ici employée au sens large c'est-à-dire qu'elle désigne tout système d'ouverture et de fermeture employé dans un aéronef tel que par exemple : porte de passagers ; porte d'issue de secours ; porte de soute ; trappe de train d'atterrissage ; ou tout autre élément ouvrant par rapport au fuselage de l'aéronef et qui est adapté à occuper au moins deux configurations.

La porte d'aéronef est constituée d'un ouvrant et d'un dormant (l'encadrement de la porte sur lequel l'ouvrant se verrouille), et également de tous les mécanismes de sécurité qui sont généralement associés à la porte dans un aéronef, tels que par exemple : mécanismes de secours, mécanismes d'ouverture-fermeture, mécanismes de verrouillage-déverrouillage, mécanismes d'armement et de désarmement de toboggan d'évacuation, etc.

Le mécanisme bistable proposé permet la construction d'une porte d'aéronef comportant, pour cette fonction, des éléments extrêmement simplifiés et légers par rapport à l'art antérieur. Aucun élément mécanique complexe n'est mis en oeuvre dans le mécanisme bistable. Ce dernier requiert peu de pièces en mouvement et aucun mouvement impliquant des frottements et guidages linéaires, ce qui permet une réduction de l'instabilité due aux glissières traditionnelles, dans un contexte où les couples et les efforts générés peuvent être importants.

Le mécanisme bistable est auto-alignant et ne nécessite par exemple aucune liaison rotule. L'arche du mécanisme bistable peut être réalisée pour travailler dans toutes les directions à iso-contrainte et à exploiter au mieux l'énergie élastique contenue dans la matière. L'arche peut également travailler en torsion pour s'adapter à des désalignements.

La fonction bistable est ainsi obtenue au sein de la porte d'aéronef avec un cout abaissé et avec une fiabilité renforcée. L'accroissement de la fiabilité est notamment due à l'inexistence de points faibles rencontrés par exemple dans l'art antérieur au niveau des jonctions entre des ressorts et d'autres éléments mécaniques, avec d'importants phénomènes de friction et de concentration de contraintes.

La porte d'aéronef ainsi équipée peut être réalisée majoritairement en matériaux composites, ce qui peut être un avantage pour certains aéronefs. Le mécanisme bistable est adapté à l'emploi de matériaux composites, notamment au niveau de l'arche qui peut être avantageusement réalisée en matériaux composites permettant l'élasticité souhaitée, ou à l'emploi de tout autre matériau technique employé dans l'aéronautique.

La porte d'aéronef selon l'invention peut comporter les caractéristiques additionnelles suivantes, seules ou en combinaison :
- le moyen de couplage du levier avec le deuxième élément de la porte comprend un moyen de couplage en rotation du levier et du deuxième élément de la porte ;
- le moyen de couplage du levier avec le deuxième élément de la porte comprend une empreinte d'entrainement en rotation centrée sur l'axe de rotation du levier par rapport au deuxième socle ;
- l'arche est élastiquement déformée et sollicite le premier pivot et le deuxième pivot l'un vers l'autre ;
- le levier est : dans une première position angulaire quand la porte d'aéronef est dans la première configuration ; dans une deuxième position angulaire quand la porte d'aéronef est dans la deuxième configuration ;
- l'arche contourne le deuxième socle lorsque la porte d'aéronef est dans la deuxième configuration ;
- le mécanisme bistable présente une position instable de basculement, dans laquelle l'axe de rotation du premier pivot, l'axe de rotation du levier sur le deuxième socle, et l'axe de rotation du deuxième pivot sont alignés ;
- dans la position instable de basculement, le levier est disposé entre les deux extrémités de l'arche ;
- l'arche est constituée d'un matériau composite feuilleté ;
- l'arche présente une largeur constante ;
- l'arche présente une largeur variable qui est plus grande au niveau d'une portion centrale de l'arche, qu'au niveau de ses extrémités ;
- l'arche présente une épaisseur variable qui est plus grande au niveau d'une portion centrale de l'arche, qu'au niveau de ses extrémités ;
- le mécanisme bistable comporte une pluralité d'arches associées ;
- entre la première configuration et la deuxième configuration, l'arche est élastiquement déformée par éloignement de ses extrémités ;
- entre la première configuration et la deuxième configuration, l'arche est élastiquement déformée par rapprochement de ses extrémités.

### PRÉSENTATION DES FIGURES

D'autres caractéristiques et avantages de l'invention ressortiront de la description non limitative qui suit, en référence aux dessins annexés dans lesquels :
- La figure 1 illustre une porte d'aéronef selon l'invention, dans une première configuration ;
- La figure 2 illustre la porte d'aéronef dans une deuxième configuration ;
- La figure 3 illustre un autre exemple où la porte d'aéronef est dans une première configuration ;
- La figure 4 illustre la porte d'aéronef de la figure 3, dans une deuxième configuration ;
- La figure 5 représente le mécanisme bistable des portes d'aéronef des figures 1 à 4, dans une première position ;
- La figure 6 représente le mécanisme bistable de la figure 5, dans une deuxième position ;
- La figure 7 représente le mécanisme bistable de la figure 5, dans une troisième position ;
- La figure 8 représente l'arche du mécanisme bistable des figures 5 à 7, vu de profil ;
- La figure 9 est une vue similaire à la figure 8, pour une variante de l'arche du mécanisme bistable.

### DESCRIPTION DÉTAILLÉE

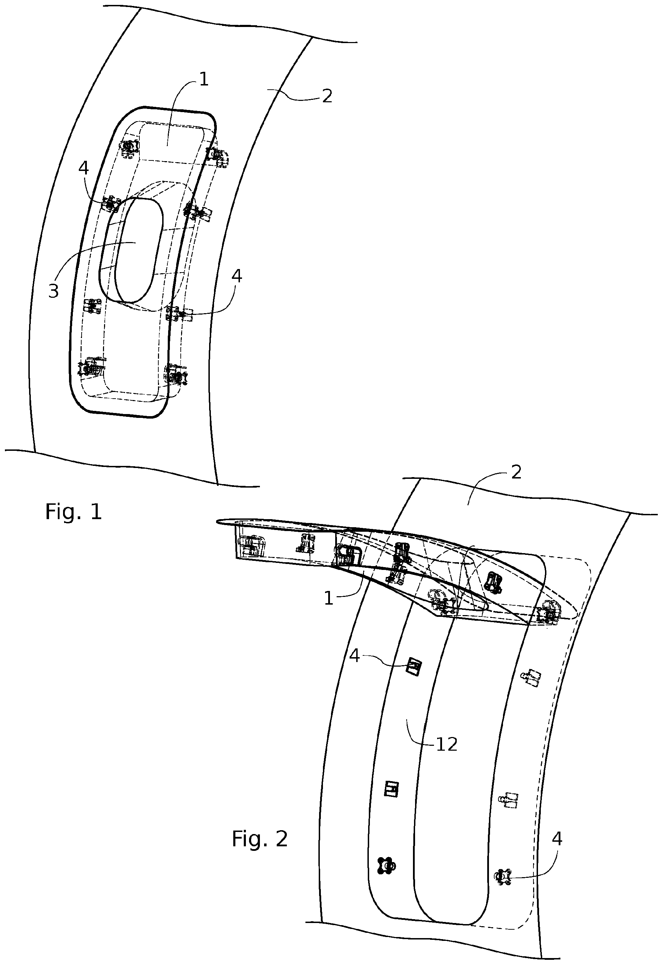

Les figures 1 et 2 illustrent un exemple de porte d'aéronef selon l'invention. La porte d'aéronef comprend un ouvrant 1 mobile en rotation par rapport à un encadrement de porte 12 fixé au fuselage 2 (en vue partielle sur les figures) de l'aéronef.

La porte d'aéronef de cet exemple comprend un hublot 3 et des butées de verrouillage 4.

Les figures 1 et 2 sont relatives à un exemple simple de première et deuxième configuration pour une porte d'aéronef. Dans cet exemple, la porte d'aéronef est adaptée à présenter une première configuration qui est une configuration de fermeture (figure 1), et est adaptée à présenter une deuxième configuration qui est une configuration d'ouverture (figure 2).

Dans cet exemple, à partir de la configuration de fermeture représentée à la figure 1 (première configuration de la porte), la porte peut être ouverte en déverrouillant les butées 4 et en repoussant manuellement l'ouvrant 1 vers l'extérieur jusqu'à la configuration d'ouverture (deuxième configuration de la porte, figure 2).

Les première et deuxième configurations de la porte d'aéronef sont des positions stables grâce à un mécanisme bistable qui sera décrit plus loin. Ainsi, un utilisateur repousse l'ouvrant 1 de sa position ouverte vers sa position fermée, en exerçant une force à l'encontre du mécanisme bistable jusqu'à un point de basculement (environ à mi-course de l'ouvrant 1, par exemple), et à partir de ce point l'ouvrant 1 poursuit ensuite sa course de manière autonome vers sa position ouverte, sous l'effet du mécanisme bistable.

Si, durant sa course, l'ouvrant 1 est relâché :
- avant le point de basculement, l'ouvrant 1 retourne à sa position d'origine ;
- après le point de basculement, l'ouvrant 1 passe à son autre position stable.

La porte d'aéronef ne peut donc pas occuper de position stable entre les configurations des figures 1 et 2, contribuant notamment à la sécurité de l'aéronef.

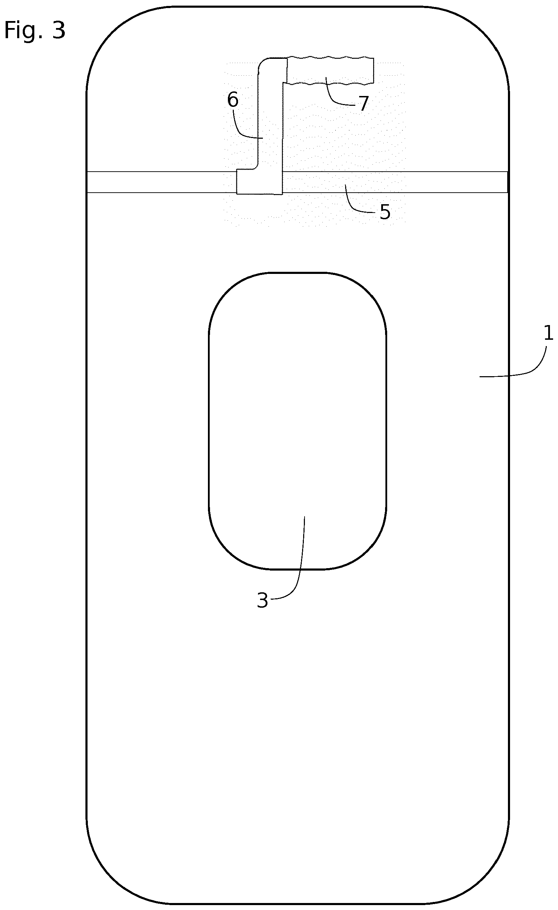

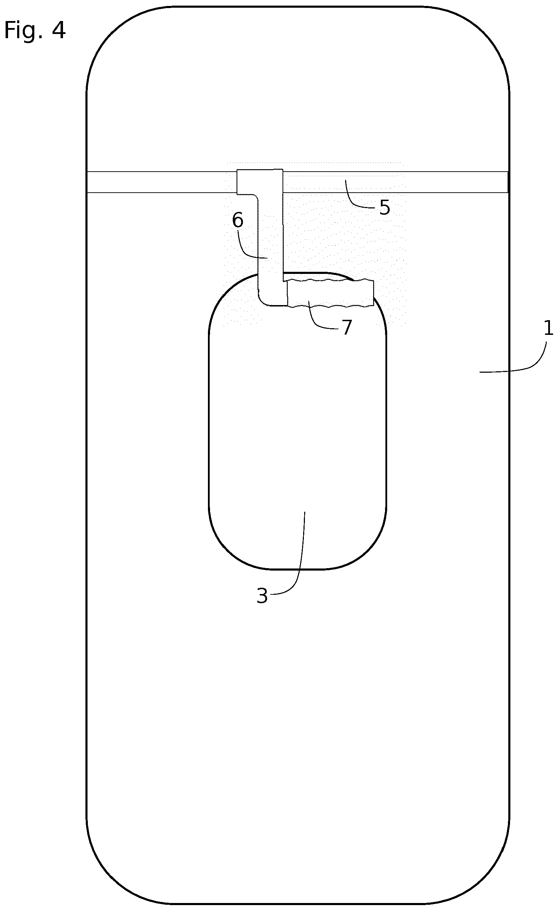

Les figures 3 et 4 illustrent un autre exemple de première et deuxième configurations possibles au sein de la porte d'aéronef.

Les première et deuxième configurations de la porte correspondent, selon ce deuxième exemple, à une configuration de verrouillage et une configuration de déverrouillage.

L'actionnement des butées de verrouillage 4 au sein de la porte d'aéronef est réalisé par un mécanisme (non représenté) piloté par la rotation d'un arbre 5. L'arbre 5 est mobile entre une position angulaire de déverrouillage et une position angulaire de verrouillage.

Un levier 6 muni à son extrémité d'une poignée 7 est relié à l'arbre 5 et permet l'entrainement en rotation de ce dernier entre ses positions angulaires de verrouillage et de déverrouillage.

Sur la figure 3, la porte d'aéronef est dans sa première configuration, qui correspond donc ici à une configuration de verrouillage. Le levier 6 est relevé de sorte que l'arbre 5 est dans sa position angulaire de verrouillage. Dans cette position angulaire, l'arbre 5 maintient actives les butées de verrouillage. Cette première configuration correspond à une configuration de porte fermée et verrouillée permettant le vol de l'aéronef.

Lorsque l'aéronef est au sol et que la porte doit être ouverte pour permettre l'accès à un espace interne de l'aéronef, le levier 6 est abaissé conformément à la figure 4 pour entraîner l'arbre 5 en rotation jusqu'à sa position angulaire de déverrouillage, ce qui libère les butées 4 et permet l'ouverture de la porte. La deuxième configuration de la porte d'aéronef, qui correspond dans cet exemple à une configuration de déverrouillage, est représentée à la figure 4.

Pour passer de la première configuration (verrouillage) à la deuxième configuration (déverrouillage), un utilisateur actionne le levier 6 grâce à la poignée 7. Un mécanisme bistable, décrit plus loin, est prévu pour que le levier 6 et l'arbre 5, ne puissent occuper que des positions stables correspondant à ces deux configurations. Si la poignée 7 est relâchée durant sa course entre ses positions des figures 3 et 4, le levier 6 et l'arbre 5 reviennent à leur position initiale, ou au contraire sont sollicités vers l'autre position stable, en fonction du point de basculement du mécanisme bistable.

Ce deuxième exemple de première et deuxième configuration de la porte, relatif aux figures 3 et 4, est ainsi une illustration supplémentaire de configuration bistable, c'est-à-dire restreinte à deux états stables uniquement pour des raisons de sécurité. Une position intermédiaire dans laquelle la porte d'aéronef n'est ni verrouillée ni déverrouillée peut en effet poser de graves problèmes de sécurité.

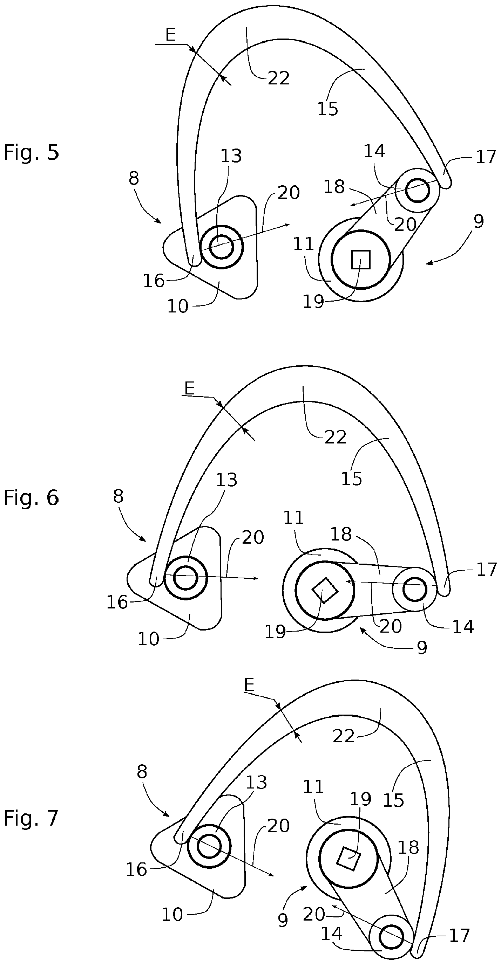

Les figures 5 à 7 illustrent un mécanisme bistable adapté à une porte d'aéronef selon l'invention. Un tel mécanisme bistable peut être mis en oeuvre, avec le dimensionnement adéquat, aussi bien dans l'exemple des figures 1 et 2 (au niveau des charnières permettant l'ouverture et la fermeture de l'ouvrant 1), que dans l'exemple des figures 3 et 4 (au niveau de l'arbre 5 pour garantir son état bistable entre sa position angulaire de verrouillage et sa position angulaire de déverrouillage). Au-delà de ces exemples, ce mécanisme bistable peut être utilisé pour assurer la sécurité vis-à-vis de tout autre élément de la porte d'aéronef qui procure à la porte une première et une deuxième configuration.

Le mécanisme bistable agit entre un premier élément de la porte et un deuxième élément de la porte qui sont mobiles l'un par rapport à l'autre et pour lesquels la fonction bistable est nécessaire. Le mécanisme bistable permet à un premier élément et à un deuxième élément d'occuper une première position relative mutuelle stable, correspondant à une première configuration de la porte, ainsi qu'une deuxième position mutuelle stable, correspondant à une deuxième configuration de la porte.

Le mécanisme bistable comporte dans cet exemple une première chape 8 et une deuxième chape 9 montées toutes deux sur un premier élément de la porte. La première chape 8 comporte un premier socle 10 et la deuxième chape 9 comprend un deuxième socle 11 permettant leur fixation sur le premier élément de la porte.

Pour l'exemple de première et deuxième configurations relatif aux figures 1 et 2 :
- le premier élément de la porte est constitué de l'encadrement de porte 12, sur laquelle la chape 8 est fixée, ainsi que la chape 9, fixée au niveau de l'axe de charnière de la porte ;
- le deuxième élément de la porte est constitué de l'ouvrant 1, qui est mobile par rapport à l'encadrement 12 selon l'axe de charnière.

Pour l'exemple de première et deuxième configurations relatif aux figures 3 et 4 :
- le premier élément de la porte est constitué de l'ouvrant 1, les chapes 8, 9 étant fixées sur l'ouvrant 1, à proximité de l'arbre 5. La chape 9 correspond au palier de l'arbre 5 ;
- le deuxième élément de la porte est constitué de l'arbre 5 qui est mobile en rotation par rapport à l'ouvrant 1 entre ses deux positions angulaires.

Le premier socle 10 et le deuxième socle 11 peuvent être montés directement sur le premier élément ou sur une pièce commune, elle-même fixée sur le premier élément, ou peuvent être tous deux faits d'une seule pièce qui est alors fixée sur le premier élément.

La première chape 8 comporte de plus un premier pivot 13 monté sur le premier socle 10. Le pivot 13 permet de fixer une pièce en liaison pivot avec le socle 10.

La deuxième chape 9 comporte un levier 18 monté rotatif sur le socle 11, par exemple grâce un palier. Un deuxième pivot 14 est monté à l'extrémité du levier 18 et permet de fixer une pièce en liaison pivot avec l'extrémité du levier 18.

Les pivots 13, 14 sont constitués par exemple d'un roulement ou d'un palier lisse. Les extrémités 16, 17 de l'arche sont fixées par tous moyens aux pivots 13, 14, par exemple par vissage de l'extrémité 13, 14 sur la bague externe d'un palier constituant le pivot 13, 14.

Le mécanisme bistable comporte de plus une arche 15 dont l'une des extrémités 16 est fixée sur le premier pivot 13 et dont l'autre extrémité 17 est fixée sur le deuxième pivot 14. L'arche 15 est constituée d'une poutre cintrée dont la première extrémité 16 est donc en liaison pivot avec le premier socle 10, et dont la deuxième extrémité 17 est en liaison pivot avec l'extrémité du levier 18.

Le levier 18 comporte de plus un moyen de couplage avec le deuxième élément. Dans le présent exemple, ce moyen de couplage est un moyen de couplage en rotation schématisé par une empreinte carrée 19 pratiquée dans le levier 18 et centrée sur l'axe de rotation du levier 18 par rapport au deuxième socle 11. Le deuxième élément de la porte (c'est-à-dire l'ouvrant 1 selon le premier exemple des figures 1 et 2, ou l'arbre 5 selon le deuxième exemple des figures 3 et 4) comporte une empreinte complémentaire de l'empreinte carrée 19, de sorte que la rotation du levier 18 autour de son axe par rapport au deuxième socle 11, est couplée en rotation au deuxième élément de la porte.

Alternativement, le moyen de couplage du levier 18 avec le deuxième élément de la porte peut être réalisé par tout autre élément permettant l'entrainement en rotation, direct ou indirect, du levier 18 par un mouvement du deuxième élément, grâce à tout moyen de couplage tel que par exemple pignons, chaines, cames, etc.

Le levier 18 est :
- dans une première position angulaire (fig. 5) quand la porte d'aéronef est dans la première configuration ;
- dans une deuxième position angulaire (fig. 7) quand la porte d'aéronef est dans la deuxième configuration.

La figure 5 illustre une première position stable du dispositif bistable correspondant à la première configuration de la porte d'aéronef. Suivant l'exemple des figures 1 et 2, la première configuration correspond à un état fermé de la porte et le levier 18 est dans une position angulaire correspondant à la position fermée de l'ouvrant 1. Suivant l'exemple des figures 3 et 4, la première configuration correspond à un état verrouillé de l'arbre 5 et le levier 18 est dans une position angulaire correspondant à la position angulaire de verrouillage de l'arbre 5.

À partir de la position du mécanisme bistable de la figure 5, la porte d'aéronef peut être amenée vers sa deuxième configuration en agissant sur le deuxième élément de la porte (l'ouvrant 1 ou l'arbre 5 suivant les deux exemples précités), ce qui entraine en rotation le levier 18 par l'intermédiaire de l'empreinte carrée 19 en direction d'une deuxième position angulaire correspondant à la figure 7.

Sur la figure 7, le mécanisme bistable est dans sa deuxième position stable qui correspond à la deuxième configuration de la porte d'aéronef. Dans cette deuxième configuration, l'ouvrant 1 est en position ouverte dans l'exemple des figures 1 et 2, ou l'arbre 5 est en position angulaire de déverrouillage suivant l'exemple des figures 3 et 4. Dans cette position du mécanisme, l'arche 15 contourne le deuxième socle 11.

Les positions du mécanisme bistable des figures 5 et 7 sont rendues stables par l'action de l'arche 15 qui est disposée entre les deux pivots 13, 14, en étant élastiquement déformée en écartement. L'arche 15 applique en permanence sur les pivots 13, 14 une force, schématisée sur les figures par les flèches 20, tendant à rapprocher les pivots 13, 14. Dans les positions stables des figures 5 et 7, les deux pivots 13, 14 sont sollicités l'un vers d'autre tandis que le levier 18 est immobilisé par une butée de fin de course (non représentée) ou simplement par le fait que le deuxième élément de la porte, auquel il est couplé, est lui-même en fin de course.

Durant la course angulaire du levier 18 permettant de passer de la position de la figure 5 à la position de la figure 7, ou inversement, le deuxième pivot 14 s'éloigne du premier pivot 13 en augmentant la déformation élastique de l'arche 15 jusqu'à un point culminant illustré à la figure 6 et correspondant au point de basculement. Une fois passé ce point de basculement de la figure 6, l'arche 15 accompagne ensuite la rotation du levier 18 et la porte d'aéronef passe alors dans l'autre configuration.

Sur la position instable de basculement de la figure 6, l'axe de rotation du premier pivot 13, l'axe de rotation du levier 18 sur le deuxième socle 11, et l'axe de rotation du deuxième pivot 14 sont alignés, le levier 18 étant disposé entre les deux extrémités 16,17 de l'arche 15. La position instable de basculement correspond à une position où la droite passant par le centre des pivots 13,14 passe également par le centre de l'empreinte 19, c'est-à-dire par l'axe de rotation du levier 18 sur le socle 11 (dans l'exemple des figures 1 et 2, le centre de l'axe 19 correspond à l'axe de charnière de la porte).

L'arche 15 peut être dans réalisée à partir de tout matériau dont les propriétés mécaniques, notamment élastiques, conviennent pour cette application. L'arche 15 peut par exemple être usinée ou moulée dans un métal ou un polymère. Dans un autre exemple de réalisation préféré, l'arche 15 est réalisée en un matériau composite feuilleté comportant un renfort en lamelles (par exemple fibres de verre / époxy ou fibres de carbone / époxy), ce qui permet d'allier légèreté et propriétés élastiques adéquates pour l'arche 15.

Dans les figures 5 à 7, l'arche 15 est élastiquement déformée en flexion, ses deux extrémités 16, 17 étant éloignées par l'action du levier 18, ou étant au contraire rapprochées l'une de l'autre en agissant sur le levier 18. L'arche 15 peut comporter une portion centrale 22 d'épaisseur plus importante, favorisant son comportement élastique. L'épaisseur de l'arche 15 désigne ici sa dimension notée E sur les figures 5 à 7.

Les propriétés élastiques d'une telle arche 15 réalisée en matériau composite sont par ailleurs hautement configurables lors de la conception (épaisseur de l'arche 15, nombre de couches de matériau constituant l'âme du composite, etc.) pour obtenir des efforts compatibles avec la masse du deuxième élément de la porte.

Par ailleurs, l'arche 15 est dimensionnée pour un travail en torsion car le mécanisme bistable ne nécessite pas d'éléments compensant le désalignement des chapes 8, 9 (les socles 10, 11 peuvent par exemple n'être pas strictement sur le même plan). La torsion de l'arche 15 permet au mécanisme bistable de fonctionner sans efforts parasites et sans blocages, et sans recourir à des rotules.

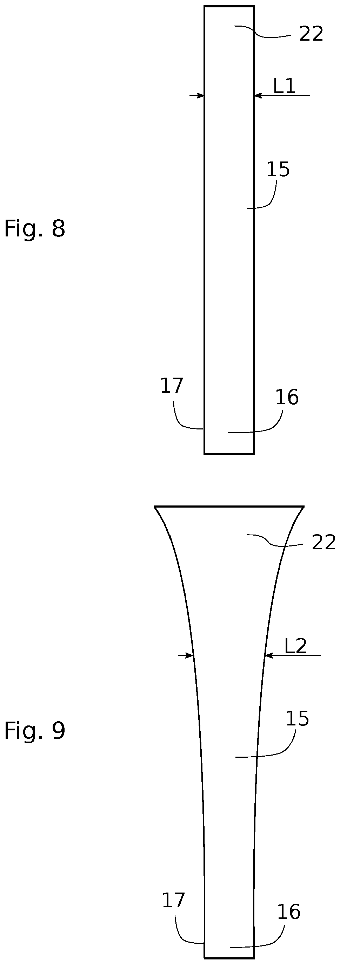

La figure 8 est une vue de profil de l'arche 15. Dans cet exemple, l'arche 15 présente une largeur L1 constante depuis la première extrémité 16 jusqu'à la deuxième extrémité 17, en passant par la portion centrale 22 de l'arche 15.

La figure 9 est une vue similaire à la figure 8 illustrant une variante de réalisation de l'arche 15 dans laquelle la largeur L2 de l'arche 15 est cette fois-ci variable et augmente en s'éloignant de la première extrémité 16 jusqu'à une valeur maximale au niveau de la portion centrale 22, puis rediminue en direction de la deuxième extrémité 17. Cette configuration permet une largeur L2 plus importante au niveau de la portion centrale 22 de l'arche 15, qu'au niveau de ses extrémités 16, 17. La courbe de raideur de l'arche 15 peut ainsi être modifiée à souhait, en fonction des éléments de la porte d'aéronef à laquelle est appliqué le mécanisme bistable, par la modification de la largeur L2 de l'arche 15.

D'autres variantes dans la géométrie de l'arche 15 peuvent bien entendu être envisagées pour adapter les propriétés mécaniques, et en particulier les propriétés élastiques, de l'arche 15 à des premier et deuxième éléments de porte particuliers.

Des variantes de réalisation de la porte d'aéronef peuvent être envisagées. Par exemple, le premier élément et le deuxième élément, qui sont mobiles l'un par rapport à l'autre, peuvent être tout élément mobile de la porte d'aéronef et de ses équipements, autres que ceux décrits en exemple.

Par ailleurs, les exemples décrits concernent le cas où l'arche 15 est élastiquement déformée par écartement de ses extrémités. En variante, l'arche peut être déformée par rapprochement de ses extrémités. Par exemple, à partir de la position de la figure 5, le levier 18 peut être tourné dans le sens antihoraire en rapprochant les extrémités 16, 17 jusqu'à une position instable de basculement puis un passage à la position de la figure 7.

Par ailleurs, au moins une arche 15 est nécessaire au fonctionnement du mécanisme bistable mais ce dernier peut cependant comporter plusieurs arches associées. Par exemple, deux arches se faisant face, avec leurs extrémités respectives fixées sur les pivots 13, 14, peuvent être employées conjointement.

## Revendications

1. Porte d'aéronef adaptée à occuper une première configuration dans laquelle un premier élément de la porte occupe une première position par rapport à un deuxième élément de la porte, et une deuxième configuration dans laquelle le premier élément occupe une deuxième position par rapport au deuxième élément, cette porte d'aéronef comportant un mécanisme bistable sollicitant la porte d'aéronef vers l'une ou l'autre des première ou deuxième configurations,
cette porte comprenant
- une première chape (8) comprenant un premier socle (10) fixé sur le premier élément et un premier pivot (13) monté rotatif sur le premier socle (10) ;
- une deuxième chape (9) comprenant : un deuxième socle (11) fixé sur le premier élément ; un levier (18) dont une première extrémité est montée pivotante sur le deuxième socle (11) ; un deuxième pivot (14) monté rotatif sur la deuxième extrémité du levier (18) ; un moyen de couplage du levier (18) avec le deuxième élément de la porte, ce moyen de couplage comprenant une empreinte (19) d'entrainement en rotation centrée sur l'axe de rotation du levier (18) par rapport au deuxième socle (11) ;
- une arche (15) élastiquement déformable en flexion dont une première extrémité (16) est fixée au premier pivot (13) et dont une deuxième extrémité (17) est fixée au deuxième pivot (14).

2. Porte d'aéronef selon la revendication 1, **caractérisée en ce que** le moyen de couplage du levier (18) avec le deuxième élément de la porte comprend un moyen de couplage en rotation (19) du levier (18) et du deuxième élément de la porte.

3. Porte d'aéronef selon l'une des revendications précédentes, **caractérisée en ce que** l'arche (15) est élastiquement déformée et sollicite le premier pivot (13) et le deuxième pivot (14) l'un vers l'autre.

4. Porte d'aéronef selon l'une des revendications précédentes, **caractérisée en ce que** le levier (18) est :
- dans une première position angulaire quand la porte d'aéronef est dans la première configuration ;
- dans une deuxième position angulaire quand la porte d'aéronef est dans la deuxième configuration.

5. Porte d'aéronef selon l'une des revendications précédentes, **caractérisée en ce que** l'arche (15) contourne le deuxième socle (11) lorsque la porte d'aéronef est dans la deuxième configuration.

6. Porte d'aéronef selon l'une des revendications précédentes, **caractérisée en ce que** le mécanisme bistable présente une position instable de basculement, dans laquelle l'axe de rotation du premier pivot (13), l'axe de rotation du levier (18) sur le deuxième socle (11), et l'axe de rotation du deuxième pivot (14) sont alignés.

7. Porte d'aéronef selon la revendication 6, **caractérisée en ce que**, dans la position instable de basculement, le levier (18) est disposé entre les deux extrémités (16,17) de l'arche (15).

8. Porte d'aéronef selon l'une des revendications précédentes, **caractérisée en ce que** l'arche (15) est constituée d'un matériau composite feuilleté.

9. Porte d'aéronef selon l'une des revendications précédentes, **caractérisée en ce que** l'arche (15) présente une largeur (L1) constante.

10. Porte d'aéronef selon l'une des revendications 1 à 8, **caractérisée en ce que** l'arche (15) présente une largeur variable (L2) qui est plus grande au niveau d'une portion centrale (22) de l'arche (15), qu'au niveau de ses extrémités (16,17).

11. Porte d'aéronef selon l'une des revendications précédentes, **caractérisée en ce que** l'arche (15) présente une épaisseur (E) variable qui est plus grande au niveau d'une portion centrale (22) de l'arche (15), qu'au niveau de ses extrémités (16,17).

12. Porte d'aéronef selon l'une des revendications précédentes, **caractérisée en ce que** le mécanisme bistable comporte une pluralité d'arches associées.

13. Porte d'aéronef selon l'une des revendications précédentes, **caractérisée en ce que**, entre la première configuration et la deuxième configuration, l'arche (15) est élastiquement déformée par éloignement de ses extrémités (16,17).

14. Porte d'aéronef selon l'une des revendications 1 à 12, **caractérisée en ce que**, entre la première configuration et la deuxième configuration, l'arche (15) est élastiquement déformée par rapprochement de ses extrémités (16,17).

## Patentansprüche

1. Flugzeugtür, welche dazu eingerichtet ist, eine erste Konfiguration einzunehmen, in der ein erstes Element der Tür eine erste Position bezüglich eines zweiten Elements der Tür einnimmt, und eine zweite Konfiguration, in der das erste Element eine zweite Position bezüglich des zweiten Elements einnimmt, wobei diese Flugzeugtür einen bistabilen Mechanismus aufweist, der die Flugzeugtür in Richtung der einen oder anderen von der ersten und zweiten Konfiguration vorspannt,
wobei diese Tür umfasst:
- eine erste Abdeckung (8), die eine erste Grundplatte (10), die an dem ersten Element befestigt ist, und einen ersten Drehzapfen (13), der drehbar auf der ersten Grundplatte (10) gelagert ist, umfasst;
- eine zweite Abdeckung (9), welche umfasst: eine zweite Grundplatte (11), die an dem ersten Element befestigt ist; einen Hebel (18), dessen erstes Ende schwenkbar an der zweiten Grundplatte (11) angebracht ist; einen zweiten Drehzapfen (14), der drehbar am zweiten Ende des Hebels (18) gelagert ist; ein Mittel zur Kopplung des Hebels (18) mit dem zweiten Element der Tür, wobei dieses Kopplungsmittel eine Vertiefung (19) zum Drehantrieb umfasst, die auf der Drehachse des Hebels (18) bezüglich der zweiten Grundplatte (11) zentriert ist;
- einen elastisch biegeverformbaren Bogen (15), von dem ein erstes Ende (16) am ersten Drehzapfen (13) befestigt ist und von dem ein zweites Ende (17) am zweiten Drehzapfen (14) befestigt ist.

2. Flugzeugtür nach Anspruch 1, **dadurch gekennzeichnet, dass** das Mittel zur Kopplung des Hebels (18) mit dem zweiten Element der Tür ein Mittel zur Drehkopplung (19) des Hebels (18) und des zweiten Elements der Tür umfasst.

3. Flugzeugtür nach einem der vorhergehenden Ansprüche, **dadurch gekennzeichnet, dass** der Bogen (15) elastisch verformbar ist und den ersten Drehzapfen (13) und den zweiten Drehzapfen (14) zueinander vorspannt.

4. Flugzeugtür nach einem der vorhergehenden Ansprüche, **dadurch gekennzeichnet, dass** der Hebel (18):
- sich in einer ersten Winkelposition befindet, wenn sich die Flugzeugtür in der ersten Konfiguration befindet;
- sich in einer zweiten Winkelposition befindet, wenn sich die Flugzeugtür in der zweiten Konfiguration befindet.

5. Flugzeugtür nach einem der vorhergehenden Ansprüche, **dadurch gekennzeichnet, dass** sich der Bogen (15) um die zweite Grundplatte (11) herum erstreckt, wen sich die Flugzeugtür in der zweiten Konfiguration befindet.

6. Flugzeugtür nach einem der vorhergehenden Ansprüche, **dadurch gekennzeichnet, dass** der bistabile Mechanismus eine instabile Kippposition aufweist, in der die Drehachse des ersten Drehzapfens (13), die Drehachse des Hebels (18) an der zweiten Grundplatte (11) und die Drehachse des zweiten Drehzapfens (14) in einer Reihe ausgerichtet sind.

7. Flugzeugtür nach Anspruch 6, **dadurch gekennzeichnet, dass** in der instabilen Kippposition der Hebel (18) zwischen den zwei Enden (16, 17) des Bogens (15) angeordnet ist.

8. Flugzeugtür nach einem der vorhergehenden Ansprüche, **dadurch gekennzeichnet, dass** der Bogen (15) aus einem lamellierten Verbundwerkstoff besteht.

9. Flugzeugtür nach einem der vorhergehenden Ansprüche, **dadurch gekennzeichnet, dass** der Bogen (15) eine konstante Breite (L1) aufweist.

10. Flugzeugtür nach einem der Ansprüche 1 bis 8, **dadurch gekennzeichnet, dass** der Bogen (15) eine variable Breite (L2) aufweist, die an einem mittleren Abschnitt (22) des Bogens (15) größer als an seinen Enden (16, 17) ist.

11. Flugzeugtür nach einem der vorhergehenden Ansprüche, **dadurch gekennzeichnet, dass** der Bogen (15) eine variable Dicke (E) aufweist, die an einem mittleren Abschnitt (22) des Bogens (15) größer als an seinen Enden (16, 17) ist.

12. Flugzeugtür nach einem der vorhergehenden Ansprüche, **dadurch gekennzeichnet, dass** der bistabile Mechanismus mehrere zugeordnete Bögen umfasst.

13. Flugzeugtür nach einem der vorhergehenden Ansprüche, **dadurch gekennzeichnet, dass** der Bogen (15) zwischen der ersten Konfiguration und der zweiten Konfiguration durch Entfernen seiner Enden (16, 17) voneinander elastisch verformt wird.

14. Flugzeugtür nach einem der Ansprüche 1 bis 12, **dadurch gekennzeichnet, dass** der Bogen (15) zwischen der ersten Konfiguration und der zweiten Konfiguration durch Annähern seiner Enden (16, 17) aneinander elastisch verformt wird.

## Claims

1. An aircraft door designed to assume a first configuration in which a first element of the door assumes a first position with respect to a second element of the door, and a second configuration in which the first element assumes a second position with respect to the second element, this aircraft door comprising a bistable mechanism urging the aircraft door toward one or the other of the first and second configurations,
this door comprising:
- a first end-fitting (8) comprising a first base (10) fixed to the first element and a first pivot (13) mounted with the ability to rotate on the first base (10);
- a second end-fitting (9) comprising: a second base (11) fixed to the first element; a lever (18), of which a first end is mounted with the ability to pivot on the second base (11); a second pivot (14) mounted with the ability to rotate on the second end of the lever (18); a coupling means for coupling the lever (18) to the second element of the door, this coupling means comprising a rotational-driving feature (19) centered on the axis of rotation of the lever (18) with respect to the second base (11);
- a bow (15) that is elastically deformable in bending and of which a first end (16) is fixed to the first pivot (13) and of which a second end (17) is fixed to the second pivot (14).

2. The aircraft door as claimed in claim 1, **characterized in that** the means for coupling the lever (18) to the second element of the door comprises a means (19) for rotationally coupling the lever (18) and the second element of the door.

3. The aircraft door as claimed in either of the preceding claims, **characterized in that** the bow (15) is elastically deformed and urges the first pivot (13) and the second pivot (14) toward one another.

4. The aircraft door as claimed in one of the preceding claims, **characterized in that** the lever (18) is:
- in a first angular position when the aircraft door is in the first configuration;
- in a second angular position when the aircraft door is in the second configuration.

5. The aircraft door as claimed in one of the preceding claims, **characterized in that** the bow (15) passes around the second base (11) when the aircraft door is in the second configuration.

6. The aircraft door as claimed in one of the preceding claims, **characterized in that** the bistable mechanism has an unstable switchover position in which the axis of rotation of the first pivot (13), the axis of rotation of the lever (18) on the second base (11), and the axis of rotation of the second pivot (14) are aligned.

7. The aircraft door as claimed in claim 6, **characterized in that**, in the unstable switchover position, the lever (18) is positioned between the two ends (16, 17) of the bow (15).

8. The aircraft door as claimed in one of the preceding claims, **characterized in that** the bow (15) is made of a laminated composite material.

9. The aircraft door as claimed in one of the preceding claims, **characterized in that** the bow (15) has a constant width (L1).

10. The aircraft door as claimed in one of claims 1 to 8, **characterized in that** the bow (15) has a variable width (L2) which is greater in a central portion (22) of the bow (15) than at the ends (16, 17) thereof.

11. The aircraft door as claimed in one of the preceding claims, **characterized in that** the bow (15) has a variable thickness (E) that is greater in a central portion (22) of the bow (15) than at the ends (16, 17) thereof.

12. The aircraft door as claimed in one of the preceding claims, **characterized in that** the bistable mechanism comprises a plurality of associated bows.

13. The aircraft door as claimed in one of the preceding claims, **characterized in that**, between the first configuration and the second configuration, the bow (15) is elastically deformed by moving its ends (16, 17) further apart.

14. The aircraft door as claimed in one of claims 1 to 12, **characterized in that**, between the first configuration and the second configuration, the bow (15) is elastically deformed by moving its ends (16, 17) closer together.
